Europäisches Patentamt

(19) European Patent Office   (11) Publication number: **0 219 957**
Office européen des brevets                      **B1**

(12)                    **EUROPEAN PATENT SPECIFICATION**

(45) Date of publication of the patent specification:   (51) Int. Cl.⁴: **F16H 57/06**
02.11.89

(21) Application number: **86306876.3**

(22) Date of filing: **05.09.86**

---

(54) Manual transmission shift control mechanism.

---

(30) Priority: **30.09.85 US 781340**

(43) Date of publication of application:
**29.04.87 Bulletin 87/18**

(45) Publication of the grant of the patent:
**02.11.89 Bulletin 89/44**

(84) Designated Contracting States:
**DE GB**

(56) References cited:
**DE-A- 2 949 354**
**FR-A- 2 256 465**
**GB-A- 2 041 119**

(73) Proprietor: **GENERAL MOTORS CORPORATION,
General Motors Building 3044 West Grand Boulevard,
Detroit Michigan 48202(US)**

(72) Inventor: **Gorman, Michael Joseph, 31650 Concord,
Apartment 14H, Madison Heights Michigan 48071(US)**
Inventor: **McClellan, William Roger, 5540 Streefkerk,
Warren Michigan 48092(US)**

(74) Representative: **Denton, Michael John et al, Patent
Section - Luton Office (F6) Vauxhall Motors Limited P.O.
Box 3 Kimpton Road, Luton Bedfordshire LU2 0SY(GB)**

## Description

This invention relates to a shift control mechanism for a manual transmission as specified in the preamble of claim I, for example as disclosed in US-A-3 933 057.

The invention is more particularly concerned with a manual transmission shift control mechanism having a reverse inhibitor.

Prior-art reverse inhibitors tend to untilise a great number of components or to require extremely accurate machining and assembly to ensure proper operation.

The present invention is concerned with providing a manual transmission shift control mechanism having an improved reverse inhibitor mechanism with a minimum number of components and potential simplicity of manufacture.

To this end a manual transmission shift control mechanism in accordance with the present invention is characterised by the features specified in the characterising portion of claim I.

The invention thereby makes it possible for an otherwise standard or conventional manual transmission shift control mechanism to be provided with a reverse inhibitor mechanism by the addition of only three additional components, which do not require other than ordinary manufacturing and assembly.

In a preferred embodiment of a manual transmission shift control mechanism in accordance with the present invention, the shift control mechanism has a selector lever movable linearly along a neutral path to a plurality of preselection positions for selecting from pairs of ratio gears, including a high forward ratio and a reverse ratio, and an inhibitor lever mechanism which is movable linearly from an "at rest" position by the selector lever against the biasing action of a spring when the selector lever is moved linearly to the preselection position for the high ratio and reverse ratio, and the inhibitor lever is urged by the spring to the "at rest" position if the selector lever is then rotated to select the high ratio, so that rotation of the selector lever from the high ratio position to the reverse ratio position is prevented during downshifting from the high ratio position prior to linear movement of the selector lever along the neutral path from the high ratio and reverse ratio preselection position.

The inhibitor lever is slidably and rotatably mounted on a pin and is spring-loaded to a "set" position aligned with the linear path of the transmission selector lever so that linear movement of the selector lever along its neutral path to the forward-reverse preselecition position moves the inhibitor lever linearly on the pin against the biasing action of the spring, and rotation of the selector lever to the forward-ratio position permits the spring to return the inhibitor lever to the "set" position so that rotation of the selector lever from the forward-ratio position to the forward-reverse preselection position will cause abutment of the selector lever with the inhibitor lever and pivoting of the inhibitor lever on the pin against the biasing force of the spring into a position of abutment with a fixed wall to prevent rotation of the selector lever to the reverse-ratio position prior to linear movement of the selector lever along the neutral path out of the forward-reverse preselection position.

In the drawings:

Figure I is a cross-sectional view, with parts shown in elevation, of a portion of a transmission selector mechanism in one mode of operation;

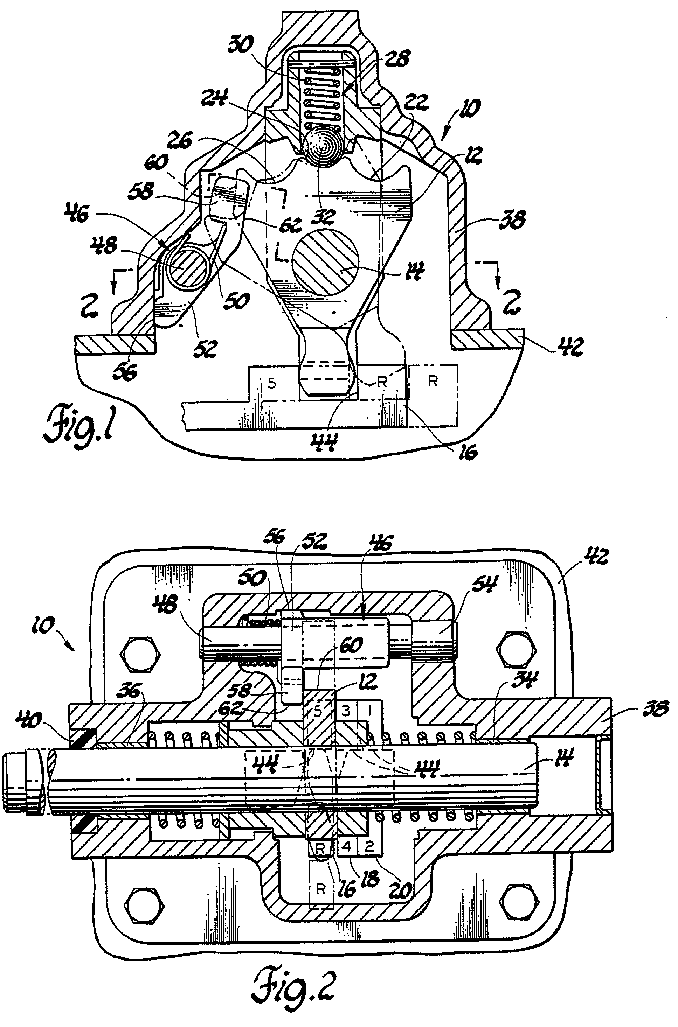

Figure 2 is a view on the line 2--2 of Figure I, in the direction of the arrows;

Figure 3 is a sectional view similar to Figure I but showing the transmission selector mechanism in another mode of operation;

Figure 4 is a view on the the line 4--4 of Figure 3, in the direction of the arrows;

Figure 5 is a view similar to Figure I but showing the selector mechanism in a further mode of operation; and

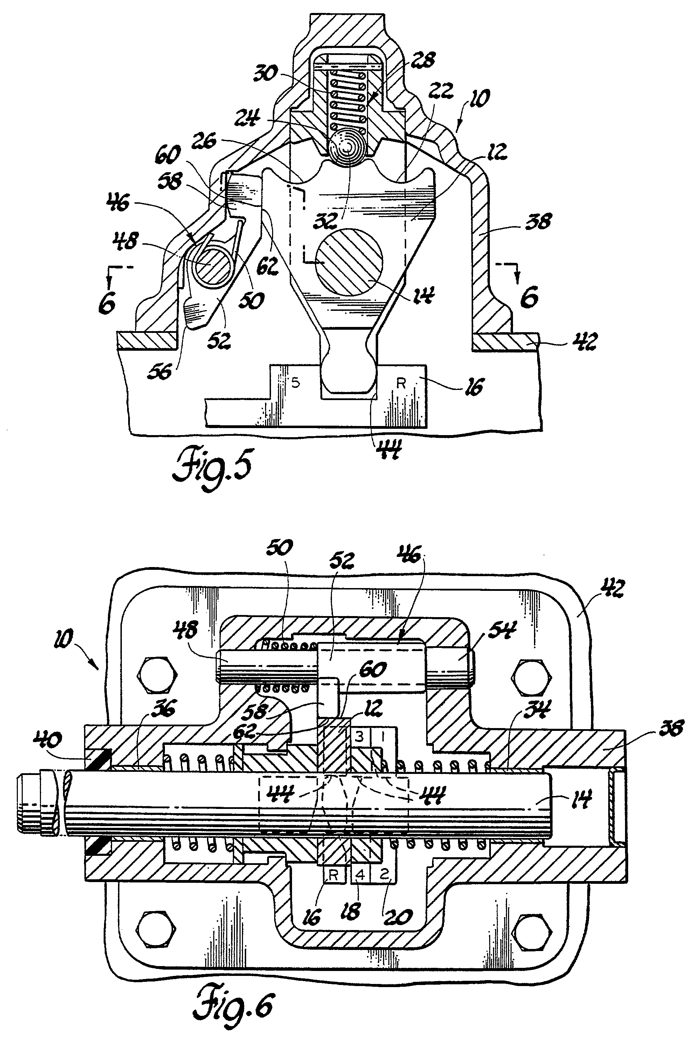

Figure 6 is a view taken on the line 6--6 of Figure 5, in the direction of the arrows.

With reference now to the drawings, wherein like characters represent the same or corresponding parts thoroughout the several views, there is seen in Figures I and 2 a transmission selector mechanism, generally designated I0, including a selector lever I2 secured to a selector shaft I4, and a plurality of gear selector rods I6, I8 and 20 consituting a I-2 selector rod 20, a 3-4 selector rod I8, and a 5-R selector rod I6. The selector lever I2 has three depressions 22, 24 and 26 formed therein which cooperate with a detent mechanism 28 to maintain the selector lever I2 in a position as selected by an operator by means of rotary manipulation of the selector shaft I4. The detent mechanism 28 includes a spring 30 which biases a detent ball 32, which ball 32 selectively engages the depressions formed in the selector lever I2.

The selctor shaft I4 is slidably and rotatably disposed on a pair of bearings 34 and 36 which are secured in a selector housing 38. A seal 40 is disposed in the housing 38 to prevent the leakage of lubricant from the inside of the housing. The selector housing 38 is secured to a transmission housing 42 which houses a plurality of conventional transmission components, not shown. As is well-know, these transmission components include gear member which establish drive ratios (gear ratios) between the input and output shafts of a stepped-ratio transmission. The gear ratios are normally established with the aid of conventional synchroniser mechanisms which are manipulated by means of yokes that are operatively connected to the selector rods I6, I8 and 20. Inasmuch as such gearing arrangements are conventional and well-know, it does not appear necessary to provide detailed drawings or further descriptions thereof for an understanding of the present invention.

Examples of transmissions in which the present selector mechanism might be used are desclosed in US-A-4 222 283 and US-A-4 I74 644.

The selector shaft I4 is manipulated linearly in the bearings 34 and 36 and rotatably in these bearings by means of a conventional shift tower, not shown. The selector lever I2, when viewed in the solid-line position of Figures I and 2, is operating in the neutral condition of the transmission selector mechanism. In this neutral condition, the selector lever is free to move linearly in respective gates (slots) 44 formed in the selector rods l6, l8 and 20. When the selector lever l2 is positioned in one of the slots 44, it is therby placed in a preselection position, and the selector shaft l4 may then be rotated from the respective preselection position to permit selection of either a first or second forward ratio by means of the selector rod 20, a third or fourth forward ratio by means of the selector rod l8, or a fifth forward or a reverse ratio by means of the selector rod l6.

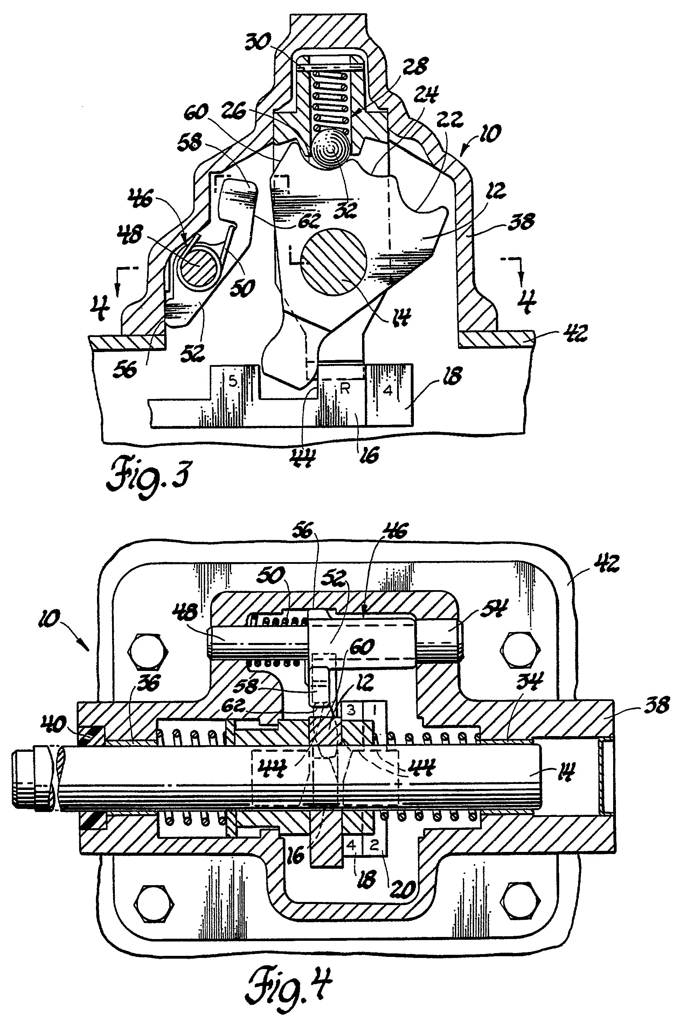

A reverse inhibitor mechanism, generally designated 46, is also disposed in the selector housing 38, and includes a rod (pin) 48, a spring 50 and an inhibitor lever 52. The inhibitor lever 52 is slidably and rotatably disposed on the rod 48, and the rod 48 is secured in the housing 38 by means of a press fit at 54. The inhibitor lever 52 is urged by means of the spring 50 to an "at rest" (set) position shown in Figures 3 and 4. In this "at rest" position, an abutment surface 56 of the inhibitor lever 52 abuts the inner wall of the selector housing 38. The inhibitor lever 52 is disposed in the "at rest" position whenever the transmission selector lever l2 is aligned with the l-2 selector rod 20, or with the 3-4 selector rod l8, or is rotated to the fifth gear ratio-selected position.

Figures 3 and 4 show the selector lever l2 when it has been rotated to the fifth gear ratio-selected position.

As the selector lever l2 is moved linearly from the slot 44 in the 3-4 selector rod l8 to the slot in the 5-R selector rod l6, it will abut an upper portion 58 of the inhibitor lever 52 such that linear movement of the selector lever l2 to the fifth-reverse (5-R) preselection position will result in linear movement of the inhibitor lever 52 along the rod 48 against the bias of the spring 50 to the position shown in Figures I and 2. If, from this postion, the selector lever l2 is rotated to select the reverse gear ratio, the inhibitor lever 52 will remain in the position shown, and the selector lever l2 will be moved to the phantom position shown in Figure I. Thus, if the selector lever l2 is moved linearly from the 3-4 position to the 5-R position, reverse gear ratio can be selected. Also, from the 5-R gear ratio position, the fifth gear ratio can be selected as shown in Figures 3 and 4. When the fifth gear ratio is selected, the inhibitor lever 52 will be moved linearly by the spring 50 along the rod 48 to the "at rest" position as seen in Figure 4, with the inhibitor lever 52 aligned with the selector lever l2.

Rotation (pivoting) of the selector lever l2 from the fifth-ratio position to the neutral position will cause abutment between flat surfaces 60 on the selector lever l2 and a flat surface 62 on the inhibitor lever 52. This abutment and further pivoting of the lever l2 to the neutral position will cause pivoting of the inhibitor lever 52 on the rod 48 in opposition to the torsional force of the spring 50 until the upper portion 58 of the inhibitor lever 52 abuts the inner wall of the selector housing 38. This abutment prevents further pivoting of the selector lever l2 in a counterclockwise direction, as seen in Figure 5.

Therefore, pivoting of the selector lever l2 from the fifth-ratio position shown in Figure 3 to the reverse-ratio position shown in Figure I is prevented by the inhibitor lever 52 as shown in Figure 5.

When the selector lever l2, by manipulation of the selector shaft l4, is moved linearly from the 5-R slot 44 to the 3-4 slot 44, the inhibitor lever 52 will be returned to the "at rest" position by the spring 50 as shown in Figure 3. From this position, it is then possible to manipulate the selector shaft l4 linearly to the 5-R preselection position and then rotatably to enage the reverse ratio.

It will be evident from the above description that direct manipulation of the selector lever l2 from the fifth-ratio to the reverse-ratio position is not possible, due to the action of the reverse inhibitor.

Also, the spring 50 is effective to control both the linear and the rotary positioning of the inhibitor lever 52 along the rod 48 until the "at rest" position is established. The spring 50 further provides the resistance (reaction forces) for the inhibitor lever 52 whenever linear movement to the position shown in Figure I or rotary movement to the position shown in Figure 5 occurs.

It will further be evident from the above description that the reverse inhibitor utilised herein involves only a minimum number of additional parts, namely three (that is, the rod 48, the spring 50 and the inhibitor lever 52), all of which may be manufactured by means of conventional processes. It may also be possible to reduce the amount of machining required, inasmuch as the only machining necessary on the lever 52 is machining of the bore in which the rod 48 is disposed. The portion 58, the surface 56 and the surface 62 can however remain in an as-cast or as-forged condition. The rod 48 could in the alternative be bonded by the use of any one of a number of well-known commercially available adhesives. Assembly of the reverse inhibitor system within the transmission housing is thus relatively simple.

## Claims

1. A shift control mechanism for a manually shifted transmission, in which an inhibitor mechanism (46) prevents direct shifting from the highest forward speed ratio to the reverse speed ratio, and the manually shifted transmission has a neutral condition, a plurality of forward speed ratio positions including a highest ratio and a lowest ratio, and a reverse ratio position, reverse inhibitor means (46) including support means (48) secured in the housing (38) and defining an inhibitor axis parallel to and offset from a selector axis, the reverse inhibitor means (46) also including inhibitor lever means (52) having at least two abutment means (56, 58, 62) and being slidably and rotatably disposed on the support means (48), and spring means (50) for urging the inhibitor lever means (52) simultaneously linearly and rotatably to one position to force one or the abutment means (56, 58, 62) into abutment against a stop to position a portion of the inhibitor lever means (52) in alignment with a selector lever means (12), the selector lever means (12) moving the inhibitor lever means (52) against the biasing action of the spring means (50) when the selector lever means (12) is moved in the neutral condition to the preselection condition for the highest forward speed ratio position and the reverse speed ratio position, the selector lever means (12) moving out of alignment and out of physical contact with the inhibitor lever means (52) when the highest forward speed ratio position is selected by movement of the selector lever means (12), the spring means (50) returning the inhibitor lever means (52) to the said one position when the highest forward speed ratio position is selected to align the inhibitor lever means (52) with the path of movement of the selector lever means (12), the selector lever means (12) contacting the inhibitor lever means (52) upon moving of the selector lever means (12) from the highest forward speed ratio position to the highest-ratio neutral preselection condition and the inhibitor lever means (52) moving against the biasing action of the spring means (50) until another (58) or the abutment means (56, 58, 62) contacts the stop to prevent further moving of the selector lever means (12) towards the reverse speed ratio position prior to linear movement of the selector lever means (12) in the neutral condition towards the lowest forward speed ratio preselection condition; characterised in that the control mechanism comprises a housing (38) which defines the stop; the selector lever means (12) is movable linearly along the selector axis in the neutral condition between preselecting conditions for each of the forward speed ratio positions and the reverse speed ratio position and rotatable about the selector axis from the neutral condition to a select position for the desired speed ratio; and the inhibitor lever means (52) is pivoted upon pivoting of the selector lever means (12) to select the position or the desired gear ratio.

2. A shift control mechanism according to claim I, characterised in that the support means (48) for the reverse inhibitor means (52) comprises a support pin.

3. A shift control mechanism according to claim I, characterised in that the abutment means (56,58,62) on the inhibitor lever means (52) comprise abutment pads.

4. A shift control mechanism according to any one of claims I to 3, characterised in that the inhibitor lever means (52) has three abutment means (56,58,62), the selector lever means (I2) physically contacts the second (58) of the abutment means (56,58,62) upon pivoting of the selector lever means (I2) from the highest forward speed ratio position to the highest ratio preselection condition, and the inhibitor lever means (52) pivots against the biasing action of the spring means (50) until the third (62) of the abutment means (56,58,62) contacts the housing (38) to prevent further pivoting of the selector lever means (I2) to the reverse speed ratio position prior to linear movement of the selector lever means (I2) in the neutral condition towards the lowest forward speed ratio preselection condition.

5. A shift control mechanism according to claim 4, characterised in that the support means (48) of the reverse inhibitor means (52) is secured in the housing (38) on a support axis parallel to and offset from the selector axis, the inhibitor lever means (52) is slidably and rotatably disposed on the support means (48) and the support axis, the spring means (50) urges the inhibitor means (52) simultaneously linearly and rotatably to a set position with the first (56) of the abutment means (56,58,62) contacting the housing (38), and the spring means (50) returns the inhibitor lever means (52) to the set position when the highest forward speed ratio is selected.

## Patentansprüche

1. Schaltsteuermechanismus für ein handgeschaltetes Getriebe, bei dem ein Sperrmechanismus (46) direkten Wechsel von dem höchsten Vorwärtsdrehzahlverhältnis zu dem Rückwärtsdrehzahlverhältnis verhindert und das handgeschaltete Getriebe eine Neutralstellung (Leerlaufstellung), eine Vielzahl von Vorwärtsdrehzahlverhältnis-Stellungen einschließlich einer Stellung für höchstes Verhältnis und einer für niedrigstes Verhältnis, und eine Stellung für Rückwärtsdrehzahlverhältnis besitzt, ein Rückwärts-Sperrmittel (46) in dem Gehäuse (38) sicher befestigte Stützmittel (48) enthält, die eine zu einer Wahlachse parallele und gegen diese versetzte Sperrachse bestimmen, das Rückwärts-Sperrmittel (46) auch ein Sperrhebelmittel (52) enthält mit mindestens zwei Anschlagmitteln (56, 58, 62), das gleitbar und drehbar an dem Stützmittel (48) angeordnet ist, und Federmittel (50), um das Sperrhebelmittel (52) gleichzeitig linear und drehbar in eine Stellung zu drängen, um eines der Anschlagmittel (56, 58, 62) in Anlage gegen einen Halt zu zwingen, um einen Abschnitt des Sperrhebelmittels (52) in Ausrichtung mit einem Wahlhebelmittel (12) zu setzen, das Wahlhebelmittel (12) das Sperrhebelmittel (52) gegen die Vorspannwirkung des Federmittels (50) bewegt, wenn das Wahlhebelmittel (12) in der Leerlaufstellung zu dem Vorwahl-Zustand für die Stellung für höchstes Vorwärtsdrehzahlverhältnis und die Stellung für Rückwärtsdrehzahlverhältnis bewegt wird, wobei das Wahlhebelmittel (12) sich außer Ausrichtung und außer körperlicher Berührung mit dem Sperrhebelmittel (52) bewegt, wenn die Stellung für höchstes Vowärtsdrehzahlverhältnis durch Bewegung des Wahlhebelmittels (12) gewählt wird, das Federmittel (50) das Sperrhebelmittel (52) zu der einen Stellung zurückstellt, wenn die Stellung für höchstes Vorwärtsdrehzahlverhältnis ausgewählt wird, um das Sperrhebelmittel (52) mit dem Bewegungspfad des Wahlhebelmittels (12) auszurichten, das Wahlhebelmittel (12) das Sperrhebelmittel (52) auf eine Bewegung des Wahlhebelmittels (12) von der Stellung für höchstes Vowärtsdrehzahlverhältnis zu dem Vorwählzustand höchstes Drehzahlverhältnis/Leerlauf hin das Sperrhebelmittel (12) berührt und das Sperrhebelmittel (52) gegen die Vorspannwirkung des Federmittels (50) bewegt, bis ein anderes (58) Anschlagmittel (56, 58, 62) den Halt berührt, um weitere Bewegung des Wahlhebelmittels (12) zu der Stellung für Rückwärtsdrehzahlverhältnis zu verhindern vor der Linearbewegung des Wahlhebelmittels (12) im Leerlaufzustand zu der Vorwahlstellung für niedrigstes Vorwärtsdrehzahlverhältnis, dadurch gekennzeichnet, daß der Steuermechanismus ein Gehäuse (38) umfaßt, welches den Halt definiert; daß das Wahlhebelmittel (12) linear längs der Wahlachse in dem Leerlaufzustand bewegbar ist zwischen Vorwahlzuständen für jede Stellung für Vorwärtsdrehzahlverhältnisse und für Rückwärtsdrehzahlverhältnis und um die Wahlachse aus dem Leerlaufzustand zu einer Wahlstellung für das gewünschte Drehzahlverhältnis drehbar ist, und daß das Sperrhebelmittel (52) auf ein Schwenken des Wahlhebelmittels (12) geschwenkt wird, um die Stellung für das gewünschte Drehzahlverhältnis zu wählen.

2. Schaltsteuermechanismus nach Anspruch 1, dadurch gekennzeichnet, daß das Stützmittel (48) für das Rückwärtssperrmittel (52) einen Stützstift umfaßt.

3. Schaltsteuermechanismus nach Ansprach 1, dadurch gekennzeichnet, daß das Anschlagmittel (56, 58, 62) Anschlagkissen an dem Sperrmittelhebel (52) umfaßt.

4. Schaltsteuermechanismus nach einem der Ansprüche 1 bis 3, dadurch gekennzeichnet, daß das Sperrhebelmittel (52) drei Anschlagmittel (56, 58, 62) besitzt, daß das Wahlhebelmittel (12) das zweite (58) Anschlagmittel (56, 58, 62) auf ein Schwenken des Wahlhebelmittels (12) von der Stellung für höchstes Vorwärtsdrehzahlverhältnis zu dem Vorwahlzustand für höchste Drehzahl hin körperlich berührt und das Sperrhebelmittel (52) gegen die Vorspannwirkung des Federmittels (50) schwenkt, bis das dritte (62) Anschlagmittel (56, 58, 62) das Gehäuse (38) berührt, um weiteres Schwenken des Wahlhebelmittels (12) zu der Stellung für Rückwärtsdrehzahlverhältnis zu verhindern vor einer Linearbewegung des Wahlhebelmittels (12) in dem Leerlaufzustand zu dem Vorwahlzustand für niedrigstes Vorwärtsdrehzahlverhältnis.

5. Schaltsteuermechanismus nach Ansprach 4, dadurch gekennzeichnet, daß das Stützmittel (48) des Rückwärtssperrmittels (52) in dem Gehäuse (38) an einer zu der Wahlachse parallelen und gegen sie versetzten Stützachse sicher befestigt ist, daß das Sperrhebelmittel (52) gleitbar und drehbar an dem Stützmittel (48) und der Stützachse angeordnet ist, daß das Federmittel (50) das Sperrmittel (52) gleichzeitig linear und drehbar zu einer festgesetzten Stellung drängt, bei der das erste (56) Anschlagmittel (56, 58, 62) das Gehäuse (38) berührt, und das Federmittel (50) das Sperrhebelmittel (52) in die festgesetzte Stellung zurückführt, wenn das höchste Vorwärtsdrehzahlverhältnis angewählt ist.

## Revendications

1. Mécanisme de changement de vitesse d'une transmission à commande manuelle dans laquelle un mécanisme inhibiteur (46) empêche le changement directement du rapport de vitesse de marche avant le plus élevé au rapport de vitesse de marche arrière, et la transmission commandée manuellement possède un état neutre, plusieurs positions de rapport de vitesses avant comprenant un rapport le plus élevé et un rapport le plus bas, et une position de rapport arrière, les moyens inhibiteurs arrière (46) comprenant des moyens formant support (48) fixés dans le boîtier (38) et définissant un axe inhibiteur parallèle à un axe sélecteur et décalé par rapport à celui-ci, les moyens formant inhibiteurs de marche arrière (46) comprenant également un levier inhibiteur (52) possédant au moins deux butées (56, 58, 62) et pouvant coulisser et tourner sur les moyens formant support (48), et des moyens élastiques (50) destinés à solliciter le levier inhibiteur (52) simultanément linéairement et angulairement vers une position pour forcer une des butées (56, 58, 62) en butée contre un arrêt pour positionner une partie du levier inhibiteur (52) en alignement avec un levier sélecteur (12), le levier sélecteur (12) mettant en mouvement le levier inhibiteur (52) contre l'action de sollicitation des moyens élastiques (50) lorsque le levier de sélecteur (12) est amené, à l'état neutre, jusqu'à la position présélectionnée pour la position de rapport de vitesse avant le plus élevé et de rapport de vitesse arrière, le levier sélecteur (12) étant mis hors d'alignement et en dehors du contact physique avec le levier inhibiteur (52) lorsque la position de rapport de vitesse avant le plus élevé est sélectionnée à l'aide du mouvement du levier sélecteur (12), les moyens élastiques (50) faisant retourner le levier inhibiteur (52) vers ladite une position lorsque la position de rapport de vitesse avant le plus élevé est sélectionnée, pour aligner le levier inhibiteur (52) avec le trajet du mouvement du levier sélecteur (12), le levier sélecteur (12) entrant en contact avec le levier inhibiteur (52) lors de la mise en mouvement du levier sélecteur (12) depuis la position de rapport de vitesse avant le plus élevé jusqu'à la position sélectionnée d'état neutre de rapport le plus élevé et le levier inhibiteur (52) étant mis en mouvement à l'encontre de l'action de sollicitation des moyens élastiques (50) jusqu'à ce qu'une autre (58) des butées (56, 58, 62) vienne au contact de l'arrêt pour empêcher un mouvement ultérieur du levier sélecteur (12) vers la position de rapport de vitesse arière antérieurement au mouvement linéaire du levier sélecteur (12) à l'état neutre vers la condition présélectionnée de rapport de vitesse avant le plus bas, caractérisé en ce que le mécanisme de commande comporte un boîtier (38) qui définit l'arrêt; le levier sélecteur (12) est mobile linéairement le long de l'axe sélecteur à l'état neutre, entre des conditions présélectionnées pour chacune des positions de rapport de vitesse avant et la position de rapport de vitesse arrière et il est peut être tourné autour de l'axe sélecteur depuis l'état neutre jusqu'à une position sélectionnée pour le rapport de vitesse désiré; et le levier inhibiteur (52) et pivoté par pivotement du levier sélecteur (12) pour sélectionner la position du rapport de vitesse désiré.

2. Mécanisme de changement de vitesse selon la revendication 1, caractérisé en ce que les moyens formant support (48) pour l'inhibiteur arrière (52) comportent un axe support.

3. Mécanisme de changement de vitesse selon la revendication 1, caractérisé en ce que les butées (56, 58, 62) situées sur le levier inhibiteur (52) comportent des patins de butée.

4. Mécanisme de changement de vitesse selon l'une quelconque des revendications 1 à 3, caractérisé en ce que le levier inhibiteur (52) possède trois butées (56, 58, 62), le levier sélecteur étant en contact physique avec la seconde (58) des butées (56, 58, 62) lors du pivotement du levier sélecteur (12) à partir de la position de rapport de vitesse avant le plus élevé jusqu'à l'état choisi de rapport le plus élevé, et le levier inhibiteur (52) pivote à l'encontre de l'action de sollicitation des moyens élastiques (50) jusqu'à ce que la troisième (62) des butées (56, 58, 62) entre en contact avec le boîtier (38) pour empêcher un pivotement supplémentaire du levier sélecteur (12) jusqu'à la position de rapport de vitesse arrière antérieurement à un mouvement linéaire du levier sélecteur (12), à l'état neutre, vers l'état choisi de rapport de vitesse avant le plus bas.

5. Mécanisme de changement de vitesse selon la revendication 4, caractérisé en ce que les moyens formant support (48) de l'inhibiteur arrière (52) sont fixés dans le boîtier (38) sur un axe support parallèle à l'axe du sélecteur et décalé par rapport à celui-ci, le levier inhibiteur (52) est disposé sur les moyens formant support (48) et l'axe support de manière à pouvoir coulisser et tourner, les moyens élastiques (50) repoussent l'inhibiteur (52) simultanément linéairement et angulairement jusqu'à une position établie dans laquelle la première (56) des butées (56, 58, 62) est en contact avec le boîtier (38) et les moyens élastiques (50) ramènent le levier inhibiteur (52) à la position établie lorsque le rapport de vitesse avant le plus élevé est choisi.

Fig.1

Fig.2

Fig.3

Fig.4

Fig.5

Fig.6